# EUROPEAN PATENT APPLICATION

(11) **EP 4 075 047 A1**
(43) Date of publication of application: **19.10.2022**
(21) Application number: 22159339.5
(22) Date of filing: 01.03.2022
(51) Int. Cl.: F16M 11/38, F16M 11/42, A63B 55/60, B62B 9/00

(54) **SUPPORT DEVICE FOR METROLOGY INSTRUMENTS**

(30) Priority: 08.03.2021 US 202163157936 P; 08.02.2022 US 202217650314
(71) Applicant: Faro Technologies, Inc., Lake Mary, FL 32746-6204 (US)
(72) Inventor: WOHLFELD, Denis, 70825 Korntal-Münchingen (DE); BOEHRET, Tobias, 70825 Korntal-Münchingen (DE); SCHORR, Christoph, 70825 Korntal-Münchingen (DE); BONNAIRE, Evelyn, 70825 Korntal-Münchingen (DE); WAGNER, Verena, 70825 Korntal-Münchingen (DE)
(74) Representative: Harris, Oliver John Richard

(57) **Abstract**

A movable support device for mounting a measuring instrument via an attachment and a method of assembling a support device for a measuring instrument are provided. The device includes a body having an internal clearance and a plurality of mounting ports for receiving the attachment. At least one wheel is connectable to the body, wherein when the at least one wheel is connected to the body, the body is supported by the at least one wheel. A handle assembly is connectable to the body. Wherein the device is transformable between an operational position and a stowed position, and in the stowed position, a portion of at least one of the handle assembly and the at least one wheel is arranged within the internal clearance.

## Description

### BACKGROUND

Embodiments of the present disclosure relate to instrument, and more particularly, to a device capable of moving an instrument such as a coordinate scanning device while maintaining a constant frame of reference.

Today dimensional measurements may be made by handheld measuring instruments that are not automated or by fixed instruments that are automated. Examples of such handheld instruments include triangulation scanners such as structured light scanners. An example of an instrument that can be automated but is fixed in place is a cartesian or articulated arm coordinate measurement machine. Another example of an automated instrument fixed in place is a robot that holds a measurement device such as a triangulation scanner.

There is a need today for a system having the capability of performing automated dimensional measurements while moving from a first position to a second position, such as by using scanning device that are normally stationary. Furthermore, a way is needed to enable the device to navigate to the required measurement positions.

While existing coordinate measurement devices are suitable for their intended purposes, what is needed is a device having the capability of making automated dimensional measurements, with results obtained in a common frame of reference

### BRIEF DESCRIPTION

In accordance with an embodiment, a movable support device for mounting a measuring instrument via an attachment is provided. The device includes a body having an internal clearance and a plurality of mounting ports for receiving the attachment. At least one wheel is connectable to the body, wherein when the at least one wheel is connected to the body, the body is supported by the at least one wheel. A handle assembly is connectable to the body. Wherein the device is transformable between an operational position and a stowed position, and in the stowed position, a portion of at least one of the handle assembly and the at least one wheel is arranged within the internal clearance.

In addition to one or more of the features described herein, or as an alternative, further embodiments of the device may include the at least one wheel having a pair of substantially identical wheels, and when the device is in the stowed position, a portion of each of the pair of substantially identical wheels is arranged within the internal clearance. In addition to one or more of the features described herein, or as an alternative, further embodiments of the device may include the pair of substantially identical wheels being positionable adjacent a rear end of the body. In addition to one or more of the features described herein, or as an alternative, further embodiments of the device may include the pair of substantially identical wheels being positionable adjacent an exterior surface of the body and adjacent an interior surface of the body.

In addition to one or more of the features described herein, or as an alternative, further embodiments of the device may include at least one wheel comprising a third wheel, and when the device is in the stowed position, a portion of the third wheel is arranged within the internal clearance. In addition to one or more of the features described herein, or as an alternative, further embodiments of the device may include the third wheel being arrangable within a cavity adjacent a front end of the body. In addition to one or more of the features described herein, or as an alternative, further embodiments of the device may include the pair of substantially identical wheels having a first diameter and the third wheel having a second diameter different from the first diameter.

In addition to one or more of the features described herein, or as an alternative, further embodiments of the device may include the at least one wheel is an active wheel. In addition to one or more of the features described herein, or as an alternative, further embodiments of the device may include the at least one wheel being connectable to the body via a quick connect mechanism. In addition to one or more of the features described herein, or as an alternative, further embodiments of the device may include the handle assembly having a handle and at least one handle mounting bracket for connecting the handle to the body. In addition to one or more of the features described herein, or as an alternative, further embodiments of the device may include the handle being configured to telescope. In addition to one or more of the features described herein, or as an alternative, further embodiments of the device may include, in the stowed position, the handle being arranged parallel to and directly adjacent a lower surface of the body.

In addition to one or more of the features described herein, or as an alternative, further embodiments of the device may include the plurality of mounting ports being positioned to receive a plurality of different attachments. In addition to one or more of the features described herein, or as an alternative, further embodiments of the device may include a power supply mounted to the body. In addition to one or more of the features described herein, or as an alternative, further embodiments of the device may include the power supply having at least one USB port.

In addition to one or more of the features described herein, or as an alternative, further embodiments of the device may include a sprocket and a locking member. The sprocket being coupled to the at least one wheel. The locking member being slidably coupled to the body, the locking member being movable between a first position and a second position, the locking member engaging the sprocket in the second position.

In accordance with another embodiment, a method of assembling a support device for a measuring instrument is provided. The method includes connecting at least one wheel to a body such that the body is supported on a surface by the at least one wheel. A handle assembly is connected to the body. An attachment is connected to at least one mounting port arranged about the body. The measuring instrument is affixed to the attachment.

In addition to one or more of the features described herein, or as an alternative, further embodiments of the method may include the at least one wheel is connected to the body via a quick connect mechanism. In addition to one or more of the features described herein, or as an alternative, further embodiments of the method may include removing the support device from a carrying case. In addition to one or more of the features described herein, or as an alternative, further embodiments of the method may include removing the at least one wheel from within an internal clearance of the body.

### BRIEF DESCRIPTION OF THE DRAWINGS

The following descriptions should not be considered limiting in any way. With reference to the accompanying drawings, like elements are numbered alike:
FIG. 1 is a perspective view of a support device for mounting a measuring instrument according to an embodiment;
FIG. 2 is a perspective view of a support device for mounting a measuring instrument according to another embodiment;
FIG. 3 is a plan view of the support device of FIG. 2 according to an embodiment;
FIG. 4A is a perspective view of a support device having a first attachment and measuring instrument according to an embodiment;
FIG. 4B is a perspective view of a support device having a second attachment and measuring instrument according to another embodiment;
FIG. 5 is a perspective view of the support device in a folded position and stowed within a carrying case according to an embodiment;
FIG. 6 is a perspective view of the support device in a folded/stowed configuration according to an embodiment;
FIG. 7 is a flow diagram illustrating a method of transforming the support device from a stowed configuration to an operational configuration according to an embodiment;
FIG. 8A is a perspective view of the support device according to another embodiment;
FIG. 8B is an enlarged view of a portion of the support device of FIG. 8A;
FIG. 9A is a perspective view of the support device according to another embodiment;
FIG. 9B is an enlarged view of a portion of the support device of FIG. 9A;
FIG. 10 is a schematic diagram of a power supply of the support device according to an embodiment;
FIG. 11A is a partial perspective view of the rear portion of the support device with the wheels locked in position according to another embodiment;
FIG. 11B is an enlarged view of a portion of the support device of FIG. 11A;
FIG. 11C is an enlarged perspective view of a portion of the support device of FIG. 11A with the wheels removed;
FIG. 12A is a partial perspective view of the rear portion of the support device with the wheels unlocked according to an embodiment; and
FIG. 12B is an enlarged view of a portion of the support device of FIG. 12A.

### DETAILED DESCRIPTION

A detailed description of one or more embodiments of the disclosed apparatus and method are presented herein by way of exemplification and not limitation with reference to the Figures.

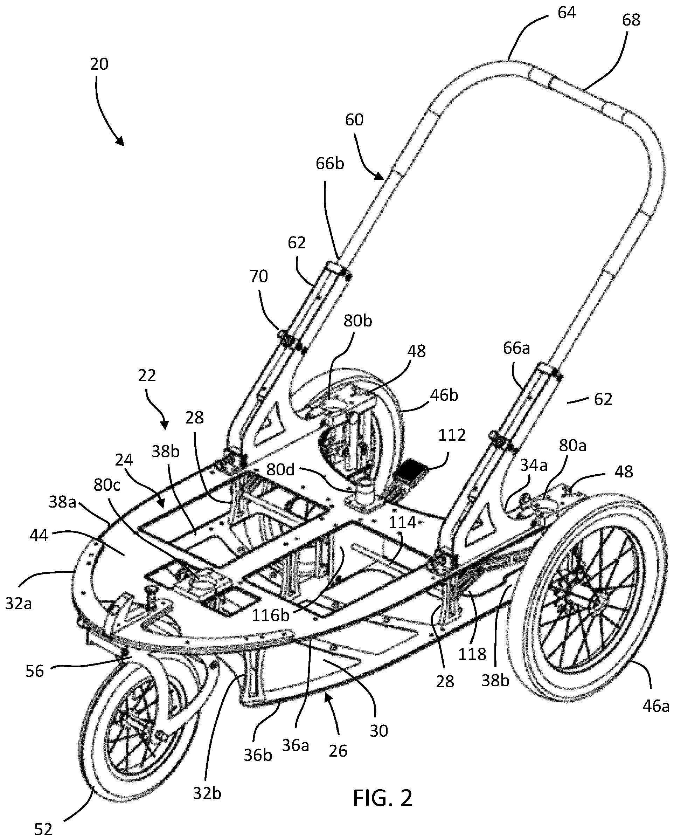

With reference now to the FIGS., an example of a dolly or movable support device 20 is illustrated. As shown, the support device 20 includes a chassis or body 22 and a plurality of wheels mounted at various locations about the body 22. In the illustrated, non-limiting embodiment, the body 22 is formed by a frame having an upper frame portion 24 and a lower frame portion 26 vertically offset from the upper frame portion 24 by a distance. The upper frame portion 24 and/or the lower frame portion 26 may be formed as a single unitary piece, such as by machining a piece of material for example. As best shown in FIG. 2, one or more holes may but need not be formed in either frame portion 24, 26 to reduce the weight of the body 22. However, in other embodiments, one or more of the upper and lower frame portions 24, 26 is formed by connecting a plurality of pieces to one another.

At least one frame connector 28 is positioned within the gap or clearance 30 defined between the upper frame portion 24 and the lower frame portion 26. The frame connectors 28, which are affixed at opposite ends to the upper and lower frame portions 24, 26, respectively, maintain the relative positioning of the upper and lower frame portions 24, 26. As shown, the one or more frame connectors 28 may extend generally perpendicularly to at least one of the upper and lower frame portions 24, 26.

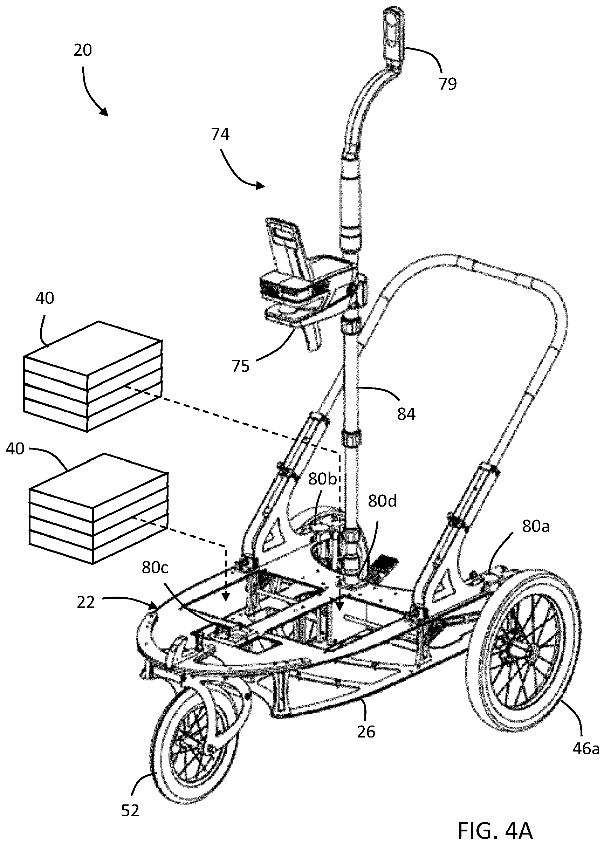

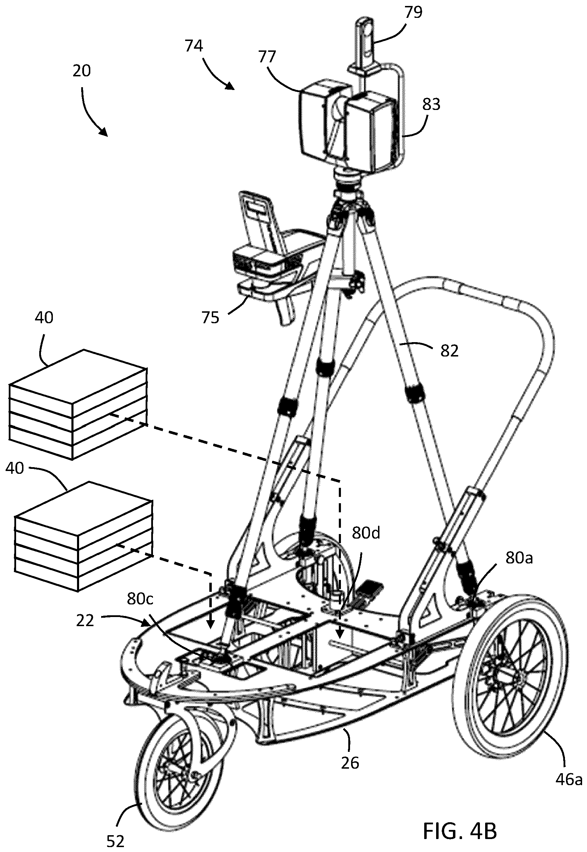

In an embodiment, the upper and lower frame portions 24, 26 of the body 22 are substantially identical. However, in other embodiments, the configuration of the upper and lower frame portions 24, 26 may vary. As best shown in FIG. 2, each frame portion 24, 26 has a front end 32a, 32b, a back end 34a, 34b, and two sides 36a, 36b, 38a, 38b connecting the front end 32a, 32b and the back end 34a, 34b. In an embodiment, the distance or width between the two sides 36a, 38a of at least the upper frame portion 24 is at least equal to or greater than the width of an energy storage device or battery 40 that may be located thereon (FIGS. 4A and 4B). In the illustrated, non-limiting embodiment, the upper frame portion 24 has a generally convex contour at both the front end 32a and the back end 34a thereof. Further, the sides 36a, 38a of the upper frame portion 24 may be generally parallel to one another and the radius of curvature of both convex contours may but need not be the same.

The lower frame portion 26 may also have a generally convex contour at the back end 34b thereof. As shown, a radius of curvature of the convex back end 34b of the lower frame portion 26 is substantially identical to the radius of curvature of the convex back end 34a of the upper frame portion 24. Further, the sides 36b, 38b of the lower frame portion 26 may be generally aligned with and oriented parallel to the sides 36a, 38a of the upper frame portion 24. However, in an embodiment, the front end 32b of the lower frame portion 26 has a concave curvature. With this configuration, the front end 32a of the upper frame portion 24 extends beyond the front end 32b of the lower frame portion 26 and a cavity 42 is defined therebetween.

In an embodiment, the upper frame portion 24 defines at least a portion of an optional upper surface 44 of the support device 20 and the lower frame portion 26 defines a lower surface of the support device 20. As shown the upper surface 44 has a generally planar configuration, and in the illustrated, non-limiting embodiment, the upper surface 44 is oriented generally horizontally. However, it should be understood that an upper surface 44 having another orientation, such as an upper surface 44 angled upwardly or downwardly in either direction for example, is within the scope of the disclosure. The lower surface defined by the lower frame portion may be oriented parallel to the upper surface 44 or alternatively, may be arranged at a non-zero angle relative to the upper surface 44.

As discussed herein, a plurality of wheels are removably connectable to the body 22. In an embodiment, a pair of wheels is mountable at opposing sides of the body 22, for example generally adjacent the interface between the sides 36a, 36b, 38a, 38b and the back end 34a, 34b thereof. The first and second wheel 46a, 46b of the pair of wheels are substantially identical and may be mountable to the body 22 in a coaxial configuration. A wheel connector 48 may be used to connect each wheel 46a, 46b of the pair of wheels to the body 22. As shown, the wheel connectors 48 are coupled to the back end 34a, 34b of both the upper frame portion 24 and the lower frame portion 26. In the illustrated, non-limiting embodiment, the wheels 46a, 46b are attached to the wheel connectors 48 at a position adjacent an exterior surface of the body 22. However, embodiments where the wheels 46a, 46b are arranged adjacent an opposite surface of the wheel connectors 48, such as within the convex contour of the back end 34a, 34b of the body 22 for example, are also within the scope of the disclosure. This arrangement provides advantages in configuring the support device 20 to be used in a variety of environments, such as when there are narrow spaces that the support device 20 is to be moved through, the wheels 46a, 46b may be positioned within the convex contour of the back end 34a, 34b, and moved to the outside for more stability when the environment allows. As will be discussed in more detail herein, the brakes are configured to cooperate with the wheels 46a, 46b in either position.

An opening formed in each wheel connector 48 is configured to receive an axle or rotational shaft supporting the wheel 46a, 46b. Although the opening is shown in the FIGS. at a location vertically below the lower frame portion 26, embodiments where the openings, and therefore the axis of rotation of the wheels 46a, 46b, is arranged at another location are also contemplated herein. Further, separate axles or shafts may be used to mount each wheel 46a, 46b individually, or alternatively, a single shaft may be used to mount both the first and second wheel 46a, 46b.

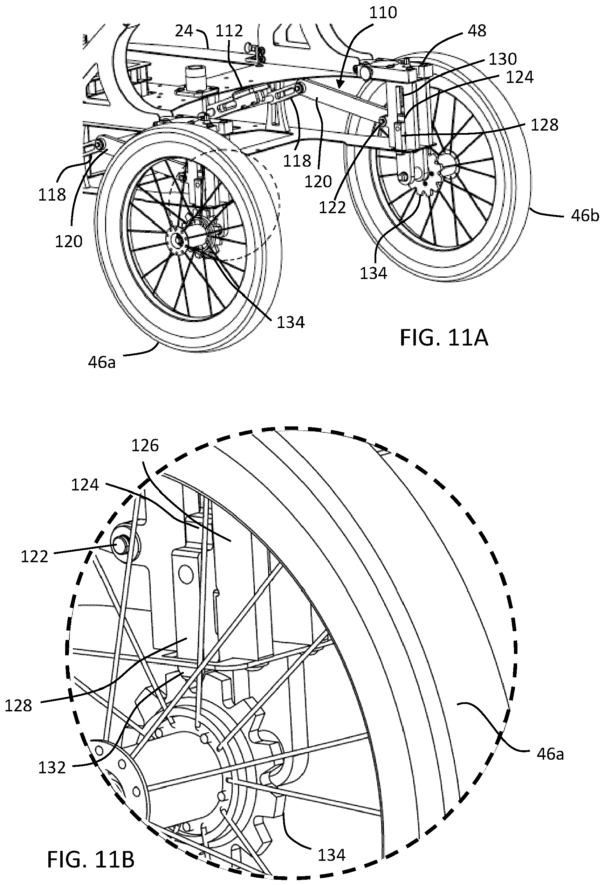

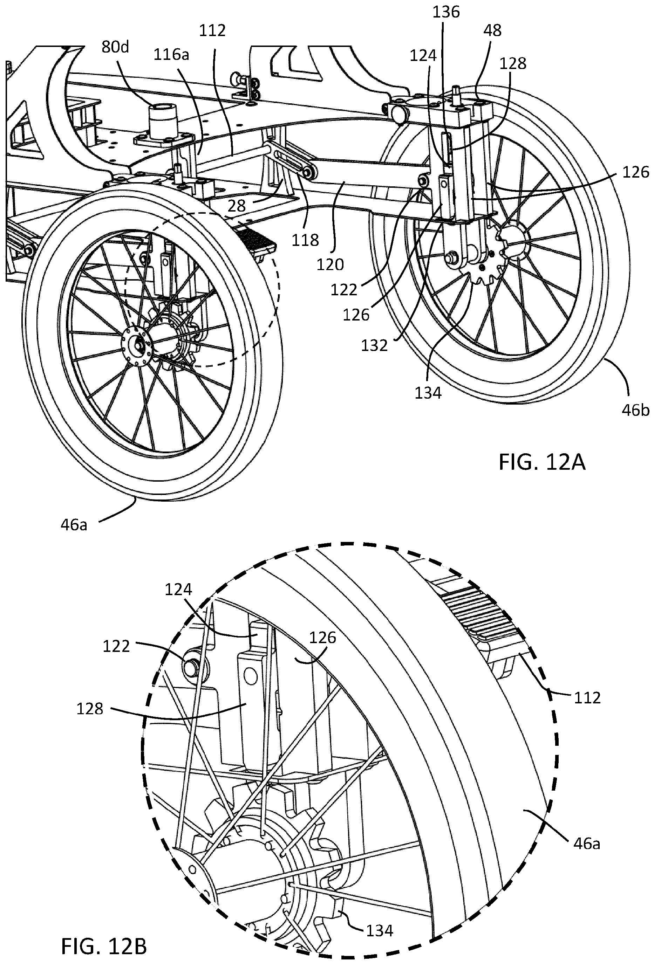

Referring now to FIG. 11A - 12B with continuing reference to FIG. 2, , an embodiment is shown of a braking assembly 110. The braking assembly 110 includes an actuator, such as foot pedal 112. The foot pedal 112 includes a platform or other member that is configured to receive the operators foot. The platform extends from an arm that is coupled to a shaft 114. In an embodiment, the shaft 114 is mounted for rotation to a pair of plates 116a, 116b. It should be appreciated that when the operator moves the pedal 112 between a lower position (FIG. 12A) and an upper position (FIG. 11A), the shaft 114 rotates about an axis defined by the openings in the pair of plates 116a, 116b. In an embodiment, the pair plates 116a, 116b extend between the top back end 34a and the bottom back end 34b.

Coupled to each end of the shaft 112 is a first linkage 118. In an embodiment, the first linkage 118 is comprised of a pair of linkages disposed on either side of the frame connector 28 with the shaft 112 extending through a slot in the frame connector. In an embodiment, the first linkage 118 rigidly coupled to the shaft 112 such that when the shaft 112 rotates, the first linkage 118 rotates therewith. Coupled to an opposite end of the first linkage 118 from the shaft 112 is a second linkage 120. The second linkage 120 extends between the first linkage 118 and a pivot 122. A portion of the second linkage 122 extends past the pivot 122 and couples to a locking member 124. The end of the arms is a tip

The locking member 124 is slidably disposed between a pair of plates 126 such that when the shaft 112 is rotated, the movement of the linkages 118, 120 causes the locking member 124 to move between an upper position (FIG. 12A) and a lower position (FIG. 11A). In an embodiment, the locking member 124 includes a pair of opposing arms 128 that extend through slots 130 in the plates 126. Arranged on the end of each arm 128 is a tip 132 that is shaped to engage a locking plate or sprocket 134. It should be appreciated that while each side of the brake assembly 110 includes a pair of arms 128, only one of the arms 128 (on each side) engages a respective sprocket 134 based on the position of the wheels 46a, 46b. In an embodiment, the sprocket 134 includes a plurality of teeth that are shaped to define space between adjacent teeth. The tip 132 is shaped to fit into the space. In an embodiment, the tip has a frustum shape.

In an embodiment, a spring 136 may be disposed between the locking member 124 and the wheel connector 48. The spring 136 biases the locking member 124 towards the lower position (FIG. 11A). It should be appreciated the positioning of the linkages 118, 120 over-centers the pivot that connects the linkages 118, 120 to keep the brake assembly 110 in the unlocked position when the operator presses on the foot pedal 112.

In the exemplary embodiment, the brake assembly 110 includes a first linkage 118, a second linkage 120 and a locking member 124 on each end of the shaft 112. It should be appreciated that the description herein and the drawings may only reference one side of the brake assembly 110 for clarity purposes and the claims should not be so limited.

In operation, there may be situations when the operator wants to fix or lock the support device 20 from movement, such as when performing a stationary scan with a coordinate measurement device for example. In an embodiment, the operator pushes on the foot pedal 112 causing the arms 128 to slide away from the sprockets 134 disengaging the tips 132. This allows the wheels 46a, 46b to rotate freely so the operator can move the support device 20. When the operator desires for the support device 20 to be stationary, the operator raises the foot pedal 112 causing the locking member 124 to slide towards the sprocket 134. It should be appreciated that in some embodiments, once the linkages 118, 120 over-center, the biasing force from spring 136 causes the tip 132 into engagement with the sprocket 134.

In the illustrated, non-limiting embodiment, the movable support device includes at least one other wheel 52, for example mounted at an opposite end of the body 22. As shown, the support device 20 includes a single wheel 52 located within the cavity 42 formed underneath the front end 32a of the upper frame portion 24 and forward of the front end 32b of the lower frame portion 26. However, it should be understood that embodiments having two wheels 52 or more than two wheels adjacent the front of the support device 20 are also contemplated herein. Further, although the wheel 52 at the front of the body 22 is illustrated as having a smaller diameter than the wheels 46a, 46b adjacent the back of the body 22, embodiments where the wheels 52, 46a, 46b are substantially identical in diameter are also contemplated herein.

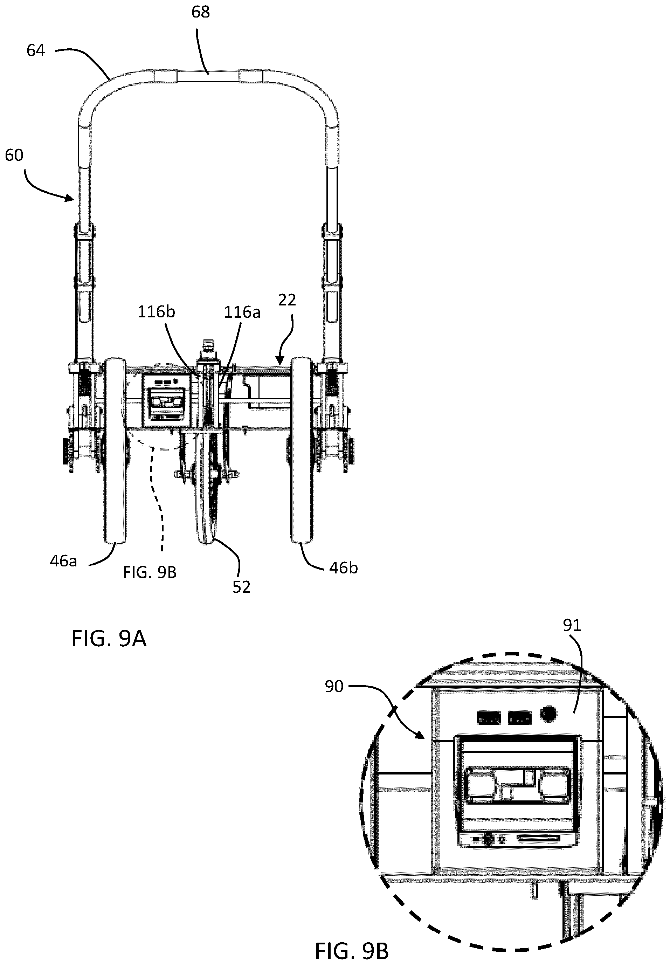

It should be appreciated that having a pair of opposing arms 128 on the locking member 124 allows the brake assembly 110 to be operable whether the wheels 46a, 46b are installed on the outside of the frame (FIG. 11A) or on the inside of the frame (FIG. 9A).

The front wheel 52 may similarly be removably mountable to the body. In an embodiment, a first portion 54 of a wheel mounting bracket is located near the front end of the body 22, for example at an underside of the upper frame portion 24. A second, complementary portion 56 of the wheel mounting bracket is affixed to the wheel 52 and is configured to engage, such as via translation for example, the first portion 54 to removably affix the front wheel 52 to the body 22. The second portion 56 remains engaged within the first portion 54 until disconnected therefrom by a user. In an embodiment, the second portion 56 of the wheel mounting bracket remains affixed to the front wheel 52 regardless of whether the wheel 52 is affixed to the body 22 or separated from the body 22.

Many different types of wheels 46a, 46b, 52 may be connected to the support device. Examples of suitable wheels include but are not limited to, simple wheels, omni-wheels, and mecanum wheels for example. In an embodiment, the wheels are passive wheels, and the support device is driven by applying a force to the support device, which causes the wheels to rotate. However, in other embodiments, one or more of the wheels are active wheels having a motorized drive associated therewith and used to propel the support device in one or more directions. For example, the front wheel 52 may be an active wheel and the wheels 46a, 46b may be passive wheels. Alternatively, one or both of the wheels 46a, 46b may be active and the front wheel 52 may be passive.

The movable support device 20 may additionally include a handle assembly 60 to allow a user to easily manipulate or steer the support device 20. In an embodiment, the handle assembly 60 includes at least one handle mounting bracket 62, and a handle 64 connectable to the at least one handle mounting bracket 62. As shown, a first handle mounting bracket 62 is connectable to the upper surface 44 of the upper frame portion 24 adjacent a first side 36a, and a second substantially identical handle mounting bracket 62 is connectable to the upper surface 44 of the upper frame portion 24 adjacent a second, opposite side 38a. Although the handle mounting brackets 62 are illustrated as being located near the back end of the body 22, embodiments where the handle mounting brackets 62 are positioned at another location relative to the body 22 are also contemplated herein. A handle 64, such as having a U-shape for example, is connectable to body 22 via the at least one handle mounting bracket 62. For example, a first end 66a of the handle 64 is removably connectable to the first handle mounting bracket 62 and a second end 66b of handle 64 is removably connectable to the second handle mounting bracket 62. In an embodiment, the ends 66a, 66b of the handle 64 are slidably received within a respective channel formed in each handle mounting bracket 62. A fastener 70 may be used to retain the ends 66a, 66b at a desired location relative to the handle mounting bracket 62. In the illustrated embodiment, when connected to the body 22, the handle 64 is configured to extend from the body 22 at an angle. However, embodiments where the handle has another configuration are also contemplated herein.

The arms defining the ends 66a, 66b of the handle 64 may be fixed in length, or alternatively, may be telescoping such that the distance between the body 22 and a base 68 of the handle 64 may be adjustable. Use of a handle 64 that is adjustable in length will facilitate storage of the handle 64, as will be described in more detail below.

As previously described, several of the components of the support device 20 are removably connectable from the body 22 thereof. The components may be connectable via standard fasteners, such as screws for example. In an embodiment, one or more of these components are connectable via a quick connect assembly. For example, the wheels 46a, 46b may be connectable to the wheel connectors 48 via a quick connect assembly, the second portion 56 of the wheel mounting bracket associated with the front wheel 52 may be connectable to the first portion 54 of the wheel mounting bracket via a quick connect assembly, the handle mounting brackets 62 may be connectable to the body 22 via a quick connect assembly, and/or the handle 64 may be connectable to the handle mounting brackets 62 via a quick connect assembly.

Various types of quick connect assemblies are known. An example of a quick connect assembly includes a fastener, such as a locking pin having an elongated shaft. One or more openings may be formed in the shaft and one or more detents, such as balls for example, are movably mounted within the interior of the shaft adjacent the openings. An actuator, such as arranged within the locking pin is operably coupled to each of the detents such that the detents are movable simultaneously from a first, extended position to a second, retracted position. When the actuator is operated, such as by applying a force to an end or head of the locking pin for example, the detents are retracted into the interior of the shaft. Upon release of the force from the head, a biasing mechanism (not shown) associated with the actuator applies a biasing force to the detents, causing the detents to translate back to a position protruding through the openings in the shaft. When the locking pin is fully inserted into a respective component, the actuator is released, and the detents are similarly received within corresponding grooves or openings formed in an adjacent surface.

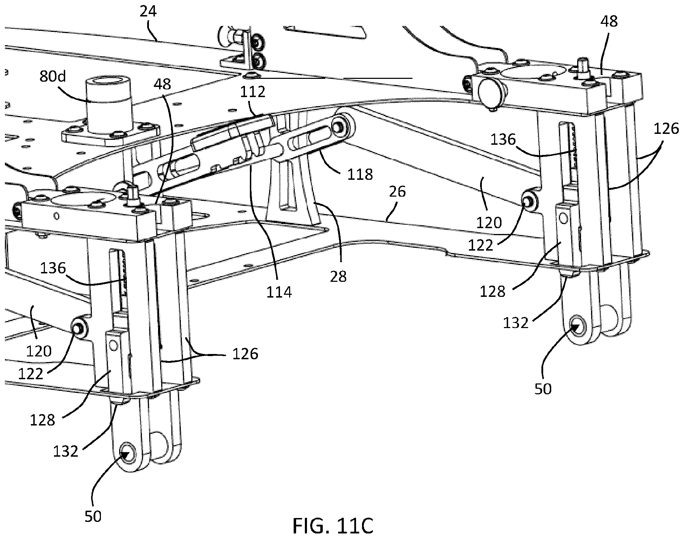

For example, a locking pin 72 as described above may be used as the axle of a wheel 46a, 46b. In such embodiments, the locking pin 72 extends through the wheel 46a, 46b and into the opening 50 (FIG. 11C) formed in the wheel connector 48, where the detents of the locking pin 72 are received within corresponding grooves formed in the interior of the wheel connector 48. This engagement restricts movement of the locking pin 72, and therefore the wheel 46a, 46b relative to the wheel connector 48. The quick connect mechanism described herein is intended as an example only. It should be understood that any suitable mechanism for connecting any of the removable components to the body 22 or to another component of the support device 20 is within the scope of the disclosure.

The support device 20 is intended for use with one or more metrology instruments or coordinate measurement devices 74, including devices that are typically handheld scanners 75 or stationary scanners 77. The types of devices that may include but are not limited to: triangulation scanners, laser line scanners, structured light scanners, time of flight scanners, laser trackers, and theodolites for example. The devices may also include image acquisition devices, such as 360 degree or omnidirectional camera 79. Accordingly, the support device 20 includes one or more mounting ports that are used to support such a coordinate measurement device 74. In an embodiment, as shown in the FIGS. 4A and 4B, a plurality of mounting ports are arranged at or extend from the upper surface of the body. In an embodiment, as shown, a first mounting port 80a is arranged at or near the first wheel connector 48, a second mounting port 80b is arranged at or near the second wheel connector 48, and a third mounting port 80c is arranged along a central longitudinal axis of the body 22, near the front end thereof. In such embodiments, the plurality of mounting ports may be positioned to receive and restrict movement of the legs of a tripod 82 such that the apex of the tripod 82 is positioned generally over the body 22, for example near the back end thereof.

Alternatively, or in addition, a fourth mounting port 80d may be located along the central longitudinal axis of the body 22 adjacent the back end thereof. In an embodiment, the fourth mounting port 80d may be configured to receive a monopod 84. However, it should be understood that a monopod or other attachment may be connected to any of the mounting ports 80a-80d described herein. In embodiments where the support device 20 includes both the third mounting port 80c and the fourth mounting port 80d, the distance along the central longitudinal axis between the third and fourth mounting ports 80c, 80d is generally equal to or greater than a length of a battery 40 that may be located on the upper surface 44 of the body 22.

Further, in an embodiment, the apex of a tripod 84 mounted to the support device 20 is vertically aligned with the fourth mounting port 80d such that regardless of which attachment 82, 84 is used to connect the coordinate measurement device 74 to the support device 20, the coordinate measurement device 74 is arranged in substantially the same location relative to the support device 20. It should be understood that a support device 20 having any number of mounting ports arranged at any suitable location to position a coordinate measurement device 74 at a convenient location accessible by an operator is within the scope of the disclosure.

Referring to FIG. 4B, an embodiment is illustrated having a coordinate measurement device 74 comprised of a 2D scanner 75, a time of flight (TOF) laser scanner 77 and a 360 degree or omnidirectional camera 79. In an embodiment, the 2D scanner 75 may be the same as the one described in United States Patent 10,565,718, the contents of which is incorporated by reference. In an embodiment, the TOF laser scanner 77 may be the same as the one described in United States Patent 9,074,878. In an embodiment, the omnidirectional camera 79 may be a model Theta camera manufactured by Ricoh Company Ltd of Tokyo, Japan. The omnidirectional camera 79 may be mounted to the tripod 82 by a frame member 83. The frame member 83 may be u-shaped allowing the TOF laser scanner 77 to rotate about the central axis of the tripod 82 while keeping the omnidirectional camera 79 fixed relative to the body 22. In an embodiment, the frame 83 offsets the camera 79 from the center axis of the tripod 82 to avoid interfering with the operation (emitting and receiving of light) of the TOF laser scanner 77.

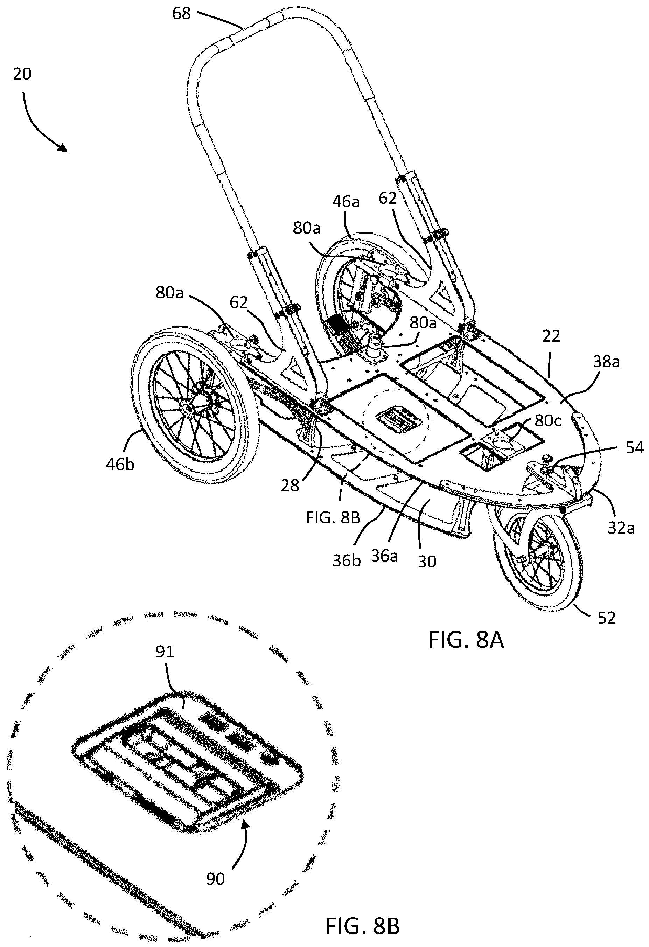

With reference now to FIG. 8A and FIG. 8B, in an embodiment, a power supply 90, is mounted to the body 22, such within the clearance 30 defined between the upper frame portion 24 and the lower frame portion 26 for example. In an embodiment, the power supply may include a battery, or alternatively, a plurality of batteries 40. In an embodiment, the batteries 40 may be disposed within, or on top of the body 22. The power supply 90 may be used to power, or recharge, one or more coordinate measurement devices 74 mounted to the support device 20. Alternatively, or in addition, in embodiments where one or more of the wheels 46a, 46b, 52 of the support device 20 active wheels, the power supply 90 may be used to drive rotation of the at least one wheel.

In the embodiment of FIG. 8A and FIG. 8B, the power supply interface 91 includes a plurality of outlets configured to provide electrical power with different characteristics as is described in more detail herein. In the embodiment of FIG. 8A and FIG. 8B, the interface 91 is position on the top of the body 22. In other embodiments, such as the embodiment of FIG. 9A and FIG. 9B, the interface 91 may face the rear of the support device 20. It should be appreciated that the interface 91 may also be positioned on the sides, or near the front of the body.

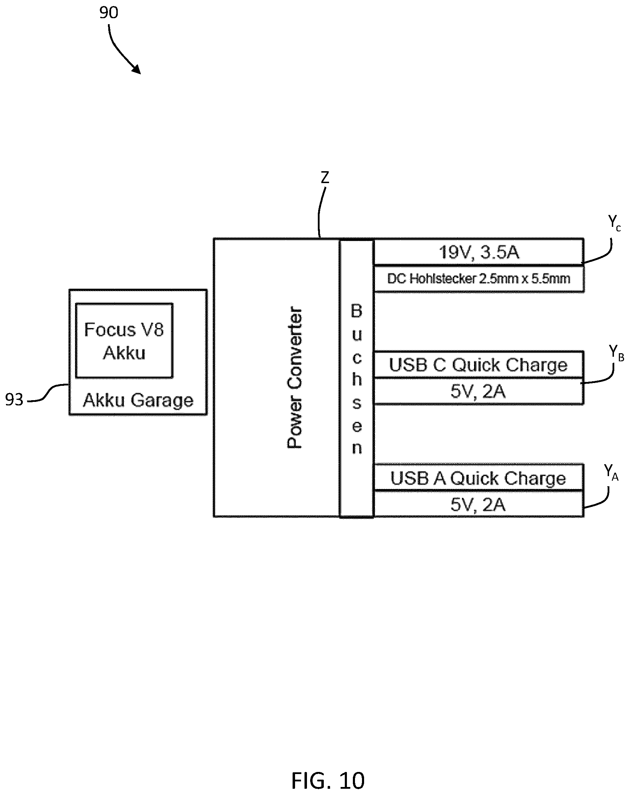

As shown in FIG. 10, the power supply 90 may include a power source 93 (such as batteries 40), a plurality of output ports Ya, Yb, Yc and a power converter Z therebetween. Cables (not shown for clarity) may be coupled between the output ports Ya, Yb, Yc and the coordinate measurement device 74. In an embodiment, one or more batteries 40 operate as the power source, and the power converter Z may be used to deliver power from the battery 40 to the ports Ya, Yb, Yc. In the illustrated embodiment, the first output port Ya is a USB Type A port (5V, 2A), the second output port Yb is a USB Type C port (5V, 2A), and the third output port Yc is a coaxial DC connector (19V, 3.5A). Providing a plurality of ports with different electrical configurations provides advantages in allowing the same power supply to provide electrical power to different types of coordinate measurement devices or to auxiliary devices (e.g. cameras, tablet computers). It should be appreciated that the ports Ya, Yb, Yc may provide electrical power to a single device, or multiple devices simultaneously.

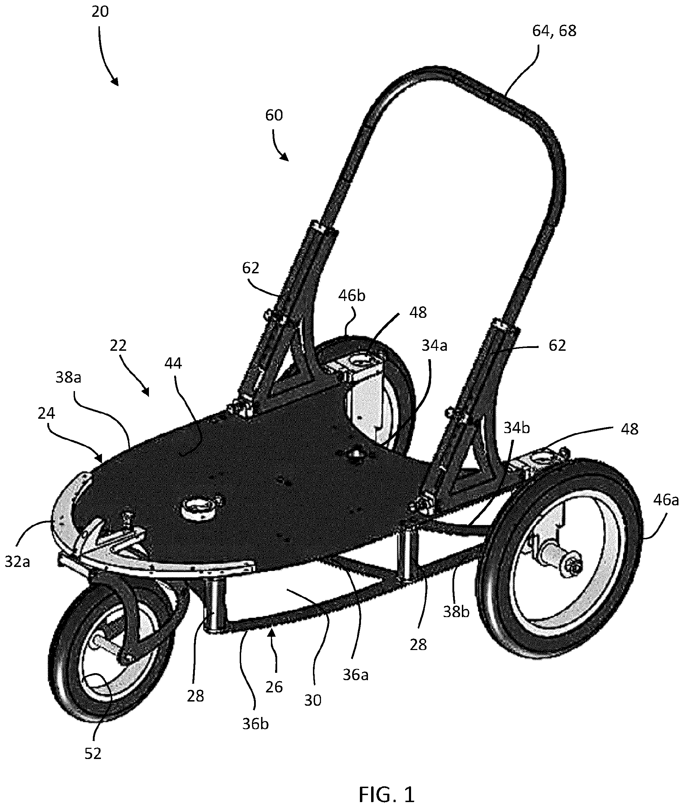

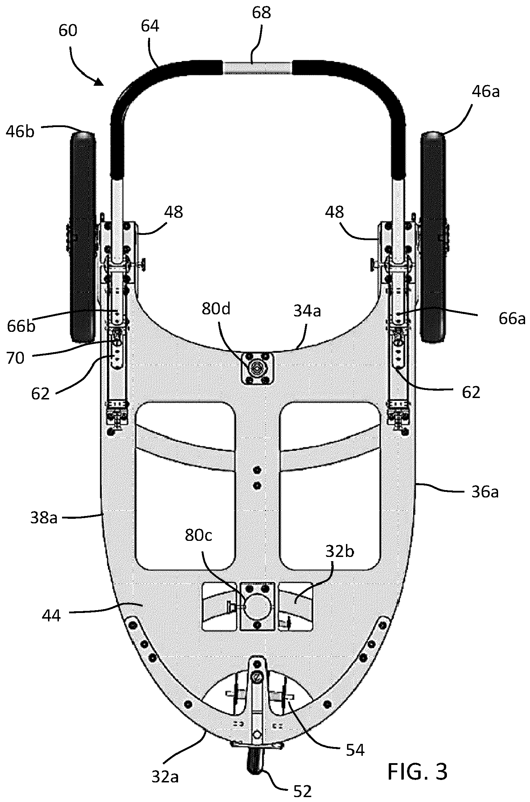

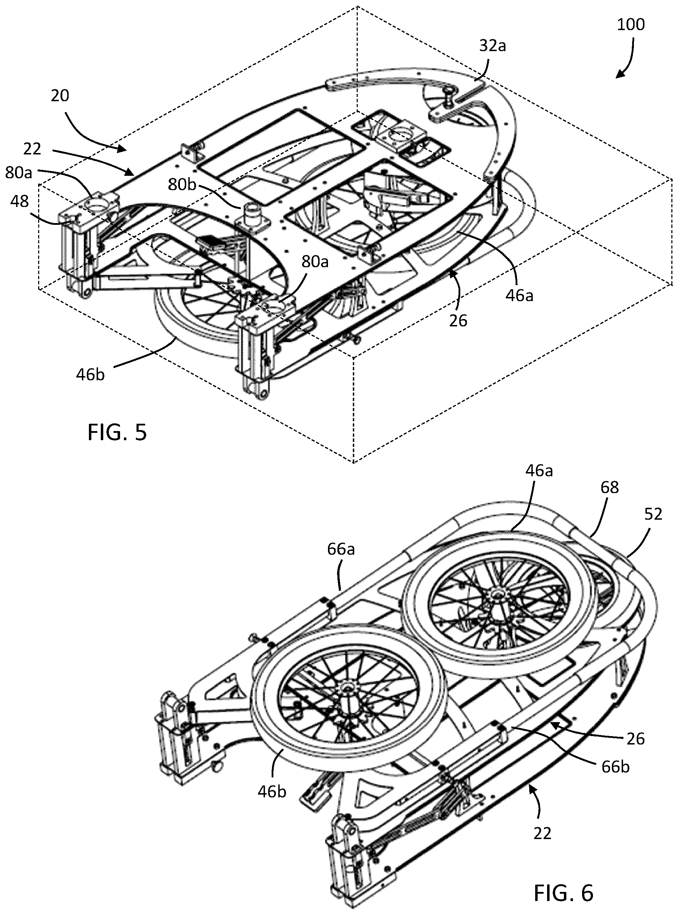

The support device 20 illustrated and described herein is configured to easily transform between an operational configuration (FIGS 1-4B) and a stowed configuration. In an embodiment, when in the stowed configuration, the support device 20 in its entirety is receivable within a carrying case 100 for storage. With reference now to FIGS. 5 and 6, in the stowed configuration, the wheels 46a, 46b, and 52 and the handle assembly 60 are disconnected from the body 22. As shown, the pair of wheels 46a, 46b are insertable within the clearance 30 defined between the upper frame portion 24 and the lower frame portion 26 of the body 22, such as near the front end or a central portion thereof. When installed in the clearance 30, the rotational axis of the wheels 46a, 46b generally extends between the upper and lower frame portions 24, 26. In an embodiment, a portion of one or both of the wheels 46a, 46b protrudes beyond the periphery of the body 22. However, embodiments where the wheels 46a, 46b are completely receivable within the clearance 30 are also contemplated herein.

The front wheel 52 may similarly be positioned at least partially or entirely within the clearance 30 defined between the upper and lower frame portions 24, 26 adjacent the back end of the body 22. As shown, the front wheel 52 is position able such that the axis of rotation thereof extends between the upper and lower frame portions 24, 26. In an embodiment, at least a portion of the front wheel 52 or the second portion 56 of the wheel mounting bracket connected thereto is positioned within the area adjacent the convex contour of the back end of the body 22.

Further, in the folded or stowed configuration, the handle 64 of the handle assembly 60 may be arranged within a plane extending generally parallel to and directly adjacent one of the upper surface 44 and the lower surface of the body 22. In addition, the handle mounting brackets 62 are positioned within the interior area defined by the handle 64, also adjacent the lower surface of the body 22. Accordingly, the handle mounting brackets 62 are arranged generally coplanar with the handle 64 adjacent a side of the body 22.

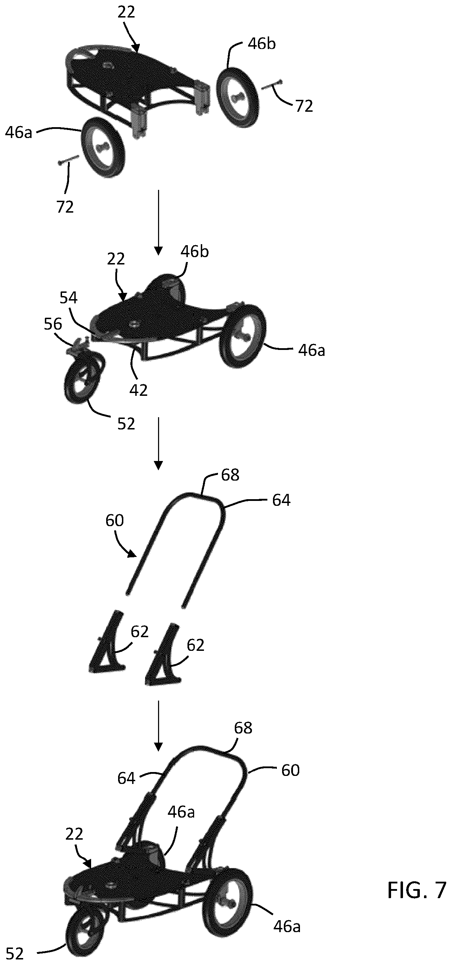

To transform the support device from the folded or stowed configuration to the operational configuration, the various components of the support device, such as the wheels 46a, 46b, 52, and handle assembly 60 for example, are removed from the case 100 and connected to the body 22. Although FIG. 7 illustrates a specific order in which the wheels 46a, 46b, front wheel 52, and handle assembly 60 are connected to the body 22, it should be understood that the wheels 46a, 46b, front wheel 52, and handle assembly 60 may be installed about the body 22 in any order. Once the support device 20 has been assembly, an attachment, such as a tripod or monopod may be connected to one or more of the mounting ports of the support device 20, and a measuring instrument, such as a three dimensional scanner for example, may be mounted to the attachment.

The movable support device 20 illustrated and described herein is small in size, such as about 600mm x 1200mm for example, and has a weight less than 10kg, making the support device 20 easy to maneuver and also to transport when stowed. In addition, by using quick connect assemblies or other simple fasteners, the removable components may be attached to and disassembled from the body 22 of the support device 20 quickly and without requiring any tools.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A movable support device for mounting a measuring instrument via an attachment comprising:
a body having an internal clearance and a plurality of mounting ports for receiving the attachment;
at least one wheel connectable to the body, wherein when the at least one wheel is connected to the body, the body is supported by the at least one wheel;
a handle assembly connectable to the body; and
wherein the device is transformable between an operational position and a stowed position, and in the stowed position, a portion of at least one of the handle assembly and the at least one wheel is arranged within the internal clearance.

2. The device of claim 1, wherein the at least one wheel includes a pair of substantially identical wheels, and when the device is in the stowed position, a portion of each of the pair of substantially identical wheels is arranged within the internal clearance.

3. The device of claim 2, wherein:
the pair of substantially identical wheels are positionable adjacent a rear end of the body or adjacent an exterior surface of the body and adjacent an interior surface of the body; and
the at least one wheel further comprises a third wheel, and when the device is in the stowed position, a portion of the third wheel is arranged within the internal clearance.

4. The device of claim 3, wherein the third wheel is arrangable within a cavity adjacent a front end of the body.

5. The device of claim 3, wherein the pair of substantially identical wheels have a first diameter and the third wheel has a second diameter different from the first diameter.

6. The device of claim 1, wherein:
the at least one wheel is an active wheel; and
the at least one wheel is connectable to the body via a quick connect mechanism.

7. The device of claim 1, wherein:
the handle assembly includes a handle and at least one handle mounting bracket for connecting the handle to the body;
the handle is a telescoping; and
in the stowed position, the handle is arranged parallel to and directly adjacent a lower surface of the body.

8. The device of claim 1, wherein the plurality of mounting ports are positioned to receive a plurality of different attachments.

9. The device of claim 1, further comprising a power supply mounted to the body.

10. The device of claim 9, wherein the power supply includes at least one USB port.

11. The device of claim 1, further comprising:
a sprocket coupled to the at least one wheel; and
a locking member slidably coupled to the body, the locking member being movable between a first position and a second position, the locking member engaging the sprocket in the second position.

12. A method of assembling a support device for a measuring instrument comprising:
connecting at least one wheel to a body such that the body is supported on a surface by the at least one wheel;
connecting a handle assembly to the body;
connecting an attachment to at least one mounting port arranged about the body; and
affixing the measuring instrument to the attachment.

13. The method of claim 12, wherein the at least one wheel is connected to the body via a quick connect mechanism.

14. The method of claim 12, further comprising removing the support device from a carrying case.

15. The method of claim 14, further comprising removing the at least one wheel from within an internal clearance of the body.
